(19) **Europäisches Patentamt / European Patent Office / Office européen des brevets**

(11) **EP 4 485 602 A1**

(12) **EUROPEAN PATENT APPLICATION**
published in accordance with Art. 153(4) EPC

(43) Date of publication:
01.01.2025 Bulletin 2025/01

(21) Application number: 23777585.3

(22) Date of filing: 09.01.2023

(51) International Patent Classification (IPC):
$H01M\ 10/0567^{(2010.01)}$    $H01M\ 4/525^{(2010.01)}$
$H01M\ 4/505^{(2010.01)}$    $H01M\ 10/0525^{(2010.01)}$

(52) Cooperative Patent Classification (CPC):
Y02E 60/10

(86) International application number:
PCT/CN2023/071258

(87) International publication number:
WO 2023/185206 (05.10.2023 Gazette 2023/40)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 31.03.2022 CN 202210335359

(71) Applicant: Ningde Amperex Technology Limited
Ningde, Fujian 352100 (CN)

(72) Inventors:
• LIU, Junfei
Ningde, Fujian 352100 (CN)
• LAN, Disheng
Ningde, Fujian 352100 (CN)
• TANG, Chao
Ningde, Fujian 352100 (CN)
• PENG, Xiexue
Ningde, Fujian 352100 (CN)

(74) Representative: Klunker IP
Patentanwälte PartG mbB
Destouchesstraße 68
80796 München (DE)

(54) **ELECTROCHEMICAL DEVICE AND ELECTRIC APPLIANCE COMPRISING SAME**

(57) This application relates to an electrochemical apparatus including a positive electrode, a negative electrode, a separator, and an electrolyte. The electrolyte includes fluoroethylene carbonate, where a percentage a of the fluoroethylene carbonate is 0.01% to 5% based on mass of the electrolyte; the positive electrode includes a positive electrode active material, where the positive electrode active material contains element Mn, and a percentage of the element Mn is greater than or equal to 15% based on mass of the positive electrode active material; and the positive electrode active material has a unit reaction area c measured in $m^2/cm^2$, where a and c satisfy the following relationship: $0.0006 \leq a/c \leq 6.25$, and the unit reaction area is a product of a weight W of the positive electrode active material per unit area and a specific surface area BET of the positive electrode active material. The electrochemical apparatus in this application guarantees the performance of batteries having an increased percentage of the element manganese in positive electrode materials, thereby decreasing the costs of battery products without undermining the performance thereof.

EP 4 485 602 A1

**Description**

**CROSS-REFERENCE TO RELATED APPLICATIONS**

This application claims priority to Chinese Patent Application No. 202210335359.9, filed on March 31, 2022 and entitled "ELECTROCHEMICAL DEVICE AND ELECTRIC APPLIANCE COMPRISING SAME", which is incorporated herein by reference in its entirety.

**TECHNICAL FIELD**

This application relates to the field of energy storage technologies, and more specifically, to an electrochemical device and an electric appliance comprising the same.

**BACKGROUND**

Nowadays, the concepts of carbon neutrality and carbon peaking accelerate the development of new energy industries. In the new energy industries, lithium batteries occupy an important position. As the needs for lithium batteries increase, needs for raw materials of transition metal elements such as cobalt, nickel, and manganese correspondingly increase, leading to a rise in the price of the related resources such as cobalt and nickel. Therefore, constant attempts have been made in the industry to decrease costs by increasing the amount of manganese (Mn) in positive electrode materials. However, the element manganese accounting for a large proportion in positive electrode active materials is apt to dissolve. The manganese dissolved deposits on negative electrodes to damage the interface protective film (SEI (solid electrolyte interphase)) of negative electrodes, resulting in poor cycling performance and storage performance of lithium batteries.

**SUMMARY**

In view of the foregoing problems in the prior art, this application is intended to provide an electrochemical apparatus and an electric appliance containing the same to resolve the foregoing problems, to be specific, to eliminate or at least alleviate poor cycling performance and storage performance of lithium batteries caused by a high proportion of manganese in positive electrode active materials.

To achieve the foregoing objectives, this application provides an electrochemical apparatus and an electric appliance containing the same.

According to one aspect, this application provides an electrochemical apparatus including a positive electrode, a negative electrode, a separator, and an electrolyte, where

the electrolyte includes fluoroethylene carbonate, where a percentage a of the fluoroethylene carbonate is 0.01% to 5% based on mass of the electrolyte;
the positive electrode includes a positive electrode active material, where the positive electrode active material contains element Mn, and a percentage of the element Mn is greater than or equal to 15% based on mass of the positive electrode active material; and
the positive electrode active material has a unit reaction area c measured in $m^2/cm^2$, where a and c satisfy the following relationship: $0.0006 \leq a/c \leq 6.25$, and the unit reaction area is a product of a weight W (g) of the positive electrode active material per unit area ($cm^2$) and a specific surface area BET ($m^2/g$) of the positive electrode active material.

In any embodiment, the electrochemical apparatus satisfies at least one of the following conditions:

$$0.0006 \leq a/c \leq 2.5;$$

the percentage of the fluoroethylene carbonate being 0.05% to 5% based on the mass of the electrolyte; or
W ranging from 8 mg/$cm^2$ to 35 mg/$cm^2$, and BET ranging from 1 $m^2$/g to 5 $m^2$/g.

In any embodiment, a/z is 0.01 to 1, where z is $D_v10/D_v99$ of the positive electrode active material.

In any embodiment, the electrolyte further includes vinylene carbonate (VC), where a percentage b of the vinylene carbonate is 0.01% to 5% based on the mass of the electrolyte.

In any embodiment, b and a satisfy the following relationship: 0.11a - 0.05% < b < 5.1a + 0.45%.

In any embodiment, $b/x \geq 10^{-3}$, where x is the percentage of the element Mn in the positive electrode active material.

In any embodiment, the electrolyte further includes an additive A, where the additive A is selected from at least one of methylene methane disulfonate (MMDS), 1,3-propene sultone (PES), 1,3-propanesulfonate (PS), succinic anhydride (SA), lithium difluorophosphate (LiPO$_2$F$_2$), 2-fluoropyridine (2-PY), or lithium bis(fluorosulfonyl)imide (LiFSI).

In any embodiment, a percentage of the additive A is 0.01% to 10% based on the mass of the electrolyte.

In any embodiment, the electrolyte further contains dimethyl carbonate (DMC), where a percentage of the dimethyl carbonate is less than or equal to 5% based on the mass of the electrolyte.

In any embodiment, the positive electrode active material includes at least one of lithium manganate or lithium nickel cobalt manganate.

In any embodiment, the electrochemical apparatus satisfies at least one of the following conditions:

the percentage of the fluoroethylene carbonate being 0.05% to 3% based on the mass of the electrolyte;
W ranging from 13 mg/cm$^2$ to 30 mg/cm$^2$, and BET ranging from 1.2 m$^2$/g to 3.5 m$^2$/g;
the electrolyte further including vinylene carbonate (VC), and a percentage of the vinylene carbonate being 0.01% to 2% based on the mass of the electrolyte;
the electrolyte further including dimethyl carbonate, and a percentage of the dimethyl carbonate being less than or equal to 1% based on the mass of the electrolyte;
the percentage of the element Mn being less than or equal to 60% in the positive electrode active material; or
a/z being 0.05 to 0.3, where z is D$_v$10/D$_v$99 of the positive electrode active material.

According to another aspect, this application further provides an electric appliance containing the foregoing electrochemical apparatus.

It is unexpectedly found that in a case that the proportion of manganese is increased in the positive electrode active material, controlling the ratio of the percentage of fluoroethylene carbonate in the electrolyte to the unit reaction area of the positive electrode active material within the range of this application can obviously improve cycling performance and storage performance of the battery. This guarantees the performance of batteries having an increased percentage of the element manganese in positive electrode materials, thereby decreasing the costs of battery products without undermining the performance thereof.

## DESCRIPTION OF EMBODIMENTS

The following specifically discloses in detail embodiments of an electrochemical apparatus and a manufacturing method thereof, a positive electrode plate, a negative electrode plate, an electrolyte, and an electric appliance of this application. However, there may be cases where unnecessary detailed descriptions are omitted. For example, detailed descriptions of a well-known matter and repeated descriptions of actually identical structures have been omitted. This is to avoid unnecessary cumbersomeness of the following descriptions, so as to facilitate understanding by persons skilled in the art. In addition, the following descriptions are provided for persons skilled in the art to fully understand this application and are not intended to limit the subject matter recorded in the claims.

In addition, quantities, ratios, and other values are sometimes presented in the format of ranges in this specification. It should be understood that such range formats are used for convenience and simplicity and should be flexibly understood as including not only values clearly designated as falling within the range but also all individual values or sub-ranges covered by the range as if each value and sub-range are clearly designated.

"Ranges" disclosed in this application are defined in the form of lower and upper limits. A given range is defined by one lower limit and one upper limit selected, where the selected lower and upper limits define boundaries of that special range. Ranges defined in this method may or may not include end values, and any combinations may be used, meaning any lower limit may be combined with any upper limit to form a range.

Unless otherwise specified, all the embodiments and optional embodiments of this application can be combined with each other to form new technical solutions.

Unless otherwise specified, all the technical features and optional technical features of this application can be combined with each other to form new technical solutions.

Unless otherwise specified, "include" and "contain" mentioned in this application are inclusive or may be exclusive. For example, terms "include" and "contain" can mean that other unlisted components may also be included or contained, or only listed components are included or contained.

As used in this application, the terms "more than" and "less than" include the present number. For example, "more than one" means one or more, and "more than one of A and B" means "A", "B" or "A and B".

The term "at least one" used in this application means one or more. For example, "at least one of A, B, or C" means "A", "B", "C", "A and B", "A and C", "B and C" or "A, B, and C".

Unless otherwise specified, in this application, the term "or" is inclusive. For example, the phrase "A or B" means "A, B, or both A and B". More specifically, any one of the following conditions satisfies the condition "A or B": A is true (or present) and B is false (or not present); A is false (or not present) and B is true (or present); or both A and B are true (or present).

Fluoroethylene carbonate is also known as 4-fluoro-1,3-dioxolane-2-one (4-fluoro-1,3-dioxolan-2-one).

Unless otherwise specified, the amounts and percentages in the context of this application are based on weight.

Unless otherwise described, all technical and scientific terms used in this application shall have the same meanings as commonly understood by those skilled in the art to which this application belongs.

The element manganese accounting for a large proportion in positive electrode active materials is apt to dissolve, causing the manganese dissolved to deposit on negative electrodes to damage the interface protective film (SEI) of negative electrodes, thereby resulting in poor cycling performance and storage performance of lithium batteries. The inventors have found through a large number of experiments that the electrochemical apparatus in this application can significantly alleviate the foregoing problems.

Therefore, a first aspect of this application provides an electrochemical apparatus including a positive electrode, a negative electrode, a separator, and an electrolyte, where

the electrolyte includes fluoroethylene carbonate, where a percentage a of the fluoroethylene carbonate is 0.01% to 5% based on mass of the electrolyte;

the positive electrode includes a positive electrode active material, where the positive electrode active material contains element Mn, and a percentage x of the element Mn is greater than or equal to 15% based on mass of the positive electrode active material; and

the positive electrode active material has a unit reaction area c measured in $m^2/cm^2$, where a and c satisfy the following relationship: $0.0006 \leq a/c \leq 6.25$, and the unit reaction area is a product of a weight W of the positive electrode active material per unit area and a specific surface area BET of the positive electrode active material.

In some embodiments, the percentage x of the element Mn is greater than or equal to 25% based on the mass of the positive electrode active material. In some embodiments, the percentage x of the element Mn is greater than or equal to 30% based on the mass of the positive electrode active material. In some embodiments, the percentage x of the element Mn is less than or equal to 60% based on the mass of the positive electrode active material.

Without being bound by any theory, the inventors argue that fluoroethylene carbonate (FEC) may be oxidatively decomposed on the surface of the positive electrode to form, together with a lithium salt in the electrolyte, a protective layer on the surface of the positive electrode, alleviating dissolution of manganese, and also form a stable protective layer on the negative electrode, reducing damages caused by reduction of manganese dissolved from the positive electrode at the negative electrode. However, because FEC has poor thermal stability, it sometimes may decompose to produce HF, accelerating dissolution of manganese on the positive electrode. The inventors have found through research that in the case that manganese accounting for a high proportion is used in positive electrode active materials, controlling a ratio of the percentage (a, based on the mass of the electrolyte) of FEC to the unit reaction area of the positive electrode active material (c, which is a product of a weight W of the positive electrode active material per unit area and the specific surface area BET of the positive electrode active material) so that the ratio is in the range of this application can fully guarantee protection effect of FEC forming films on the positive electrode and the negative electrode and alleviate adverse effects caused by decomposition of too much FEC.

Electrolyte

The electrolyte is between the positive electrode plate and the negative electrode plate, and plays a role of conducting ions. The electrolyte includes an electrolytic lithium salt and a solvent.

In some embodiments, the electrolytic lithium salt may be selected from at least one of lithium hexafluorophosphate, lithium tetrafluoroborate, lithium perchlorate, lithium bis(fluorosulfonyl)imide, lithium bis(trifluoromethanesulfonyl)imide, lithium trifluoromethanesulfonate, lithium difluorophosphate, lithium difluorooxalatoborate, lithium bisoxalatoborate, lithium difluorodioxalate phosphate lithium fluoride aluminate, lithium tetrachloroaluminate, lithium chloride, lithium fluoride, lithium perfluorobutylsulfonate, or lithium tetrafluoro oxalate phosphate.

In some embodiments, the electrolytic lithium salt may have a percentage of 1wt% to 30wt% based on the mass of the electrolyte. In some embodiments, the electrolytic lithium salt has a percentage of 5wt% to 20wt% based on the mass of the electrolyte. In some embodiments, the electrolytic lithium salt has a percentage of 8wt% to 15wt% based on the mass of the electrolyte.

In some embodiments, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dioxolane, dimethyl ether, methyl sulfonyl methane, ethyl methanesulfonate, or diethyl sulfone.

In some embodiments, the solvent may have a percentage of more than 20wt% based on the mass of the electrolyte. In some embodiments, the solvent may have a percentage of more than 30wt% based on the mass of the electrolyte. In some embodiments, the solvent may have a percentage of more than 40wt% based on the mass of the electrolyte. In some embodiments, the solvent may have a percentage of more than 50wt% based on the mass of the electrolyte. In some embodiments, the solvent may have a percentage of more than 60wt% based on the mass of the electrolyte.

In some embodiments, the electrolyte includes the fluoroethylene carbonate, where the percentage a of the fluoroethylene carbonate is 0.01% to 5%. In some embodiments, the percentage a of the fluoroethylene carbonate is 0.05% to 3% based on the mass of the electrolyte. In some embodiments, the percentage a of the fluoroethylene carbonate is 0.05% to 2% based on the mass of the electrolyte.

In some embodiments, the electrolyte further includes vinylene carbonate (VC), where a percentage b of the vinylene carbonate is 0.01% to 5%. In some embodiments, the percentage b of the vinylene carbonate is 0.01% to 4% based on the mass of the electrolyte. In some embodiments, the percentage b of the vinylene carbonate is 0.01% to 2% based on the mass of the electrolyte.

In some embodiments, b and a satisfy the following relationship: $0.11a - 0.05\% < b < 5.1a + 0.45\%$.

In some embodiments, the electrolyte further includes an additive A, where the additive A is selected from at least one of methylene methane disulfonate (MMDS), 1,3-propene sultone (PES), 1,3-propanesulfonate (PS), succinic anhydride (SA), lithium difluorophosphate ($LiPO_2F_2$), 2-fluoropyridine (2-PY), or lithium bis(fluorosulfonyl)imide (LiFSI).

In some embodiments, the additive A is selected from at least one of 1,3-propanesulfonate or 2-fluoropyridine.

In some embodiments, a percentage of the additive A is 0.01% to 10% based on the mass of the electrolyte. In some embodiments, the percentage of the additive A is 0.01% to 6% based on the mass of the electrolyte.

In some embodiments, the electrolyte further contains dimethyl carbonate (DMC), where a percentage of the dimethyl carbonate is less than or equal to 5% based on the mass of the electrolyte.

In some embodiments, the percentage of the dimethyl carbonate is less than or equal to 1% based on the mass of the electrolyte.

In some embodiments, the electrolyte further includes other additives. For example, the additive may include a negative electrode film-forming additive and a positive electrode film-forming additive, or may include an additive that can improve some performance of a battery, for example, an additive for improving over-charge performance of a battery, an additive for improving high-temperature performance or low-temperature performance of a battery, and the like.

Positive electrode

In this application, the positive electrode is a positive electrode plate including a positive electrode current collector and a positive electrode plate film layer disposed on at least one surface of the positive electrode current collector.

For example, the positive electrode current collector has two opposite surfaces in its thickness direction, and the positive electrode plate film layer is disposed on either or both of the two opposite surfaces of the positive electrode current collector.

The positive electrode plate film layer includes the positive electrode active material. The positive electrode active material contains element Mn, where the percentage x of the element Mn is 15% to 60% based on the mass of the positive electrode active material; and the positive electrode active material has the unit reaction area c measured in $m^2/cm^2$, where a and c satisfy the following relationship: $0.0006 \leq a/c \leq 6.25$, and the unit reaction area is the product of the weight W of the positive electrode active material per unit area and the specific surface area BET of the positive electrode active material. In some embodiments, $0.001 \leq a/c \leq 4.5$. In some embodiments, $0.001 \leq a/c \leq 2.5$.

In some embodiments, W ranges from 8 mg/cm$^2$ to 35 mg/cm$^2$, and BET ranges from 1 m$^2$/g to 5 m$^2$/g. In some embodiments, W ranges from 13 mg/cm$^2$ to 30 mg/cm$^2$, and BET ranges from 1.2 m$^2$/g to 3.5 m$^2$/g.

In some embodiments, $b/x \geq 10^{-3}$, where b is the percentage of the vinylene carbonate, and x is the percentage of the element Mn. In some embodiments, $b/x \leq 0.1$.

In some embodiments, x and a satisfy that the value of $x \times e^a$ ranges from 0.1 to 1.2, where e is a base number of natural logarithm. In some embodiments, the value of $x \times e^a$ ranges from 0.15 to 0.7.

In this application, the specific surface area BET is tested by using the nitrogen adsorption method (GB/T 19587-2017). For example, the sample is baked in a 120°C vacuum oven for 2 h before the test; a six-point BET method (that is, P/P0=0.05/0.10/0.15/0.2/0.25/0.3) is used for the test; and the purity of the nitrogen used is 99.999%, and the temperature of liquid nitrogen is -196°C.

The weight W of the positive electrode active material layer per unit area is measured by using the following method: A positive electrode plate with a specified area S is used, having the positive electrode active material layer on two surfaces of the current collector, the positive electrode active material layers are scraped from the positive electrode current collector (all the materials except the current collector are scraped), the powder is weighed to obtain a weight m, and the weight W per unit area is equal to m/(S × 2).

Alternatively, a positive electrode with a specified area S1 is used, having the active material layer on one surface of the current collector, the positive electrode active material layer is scraped from the positive electrode current collector (all the materials except the current collector are scraped), the powder is weighed to obtain a weight m1, and the weight W per unit area is equal to m1/S1.

Then, the foregoing weight W (g/cm$^2$) of the positive electrode active material layer per unit area times the foregoing specific surface area BET (m$^2$/g) of the positive electrode active material layer to obtain the unit reaction area c (m$^2$/cm$^2$) of the positive electrode active material layer.

In some embodiments, the positive electrode active material may further include at least one of the following materials: olivine-structured lithium-containing phosphate, lithium transition metal oxide, and respective modified compounds thereof. However, this application is not limited to these materials, but may use other conventional materials that can be used as positive electrode active materials for batteries instead. One of these positive electrode active materials may be used alone, or two or more of them may be used in combination. Examples of the lithium transition metal oxide may include but are not limited to at least one of lithium cobalt oxide (for example, $LiCoO_2$), lithium nickel oxide (for example, $LiNiO_2$), lithium manganese oxide (for example, $LiMnO_2$ and $LiMn_2O_4$), lithium nickel cobalt oxide, lithium manganese cobalt oxide, lithium nickel manganese oxide, lithium nickel cobalt manganese oxide (for example, $LiNi_{1/3}Co_{1/3}Mn_{1/3}O_2$ (or NCM$_{333}$ for short), lithium nickel cobalt aluminum oxide (for example, $LiNi_{0.85}Co_{0.15}Al_{0.05}O_2$)), or modified compounds thereof. Examples of the olivine-structured lithium-containing phosphate may include but are not limited to at least one of lithium iron phosphate (for example, $LiFePO_4$ (LFP for short)), composite material of lithium iron phosphate and carbon, lithium manganese phosphate (for example, $LiMnPO_4$), composite material of lithium manganese phosphate and carbon, lithium manganese iron phosphate, or composite material of lithium manganese iron phosphate and carbon.

In some embodiments, a percentage of the positive electrode active material in the positive electrode plate film layer is not less than 80wt% based on total weight of the positive electrode plate film layer, and optionally, not less than 90wt%. In some embodiments, the percentage of the positive electrode active material in the positive electrode plate film layer is not less than 95wt% based on the total weight of the positive electrode plate film layer.

In some embodiments, $D_v99$ of the positive electrode active material is y $\mu$m, and y ranges from 20 to 60. In some embodiments, y ranges from 25 to 55. In some embodiments, y ranges from 30 to 53.

In this application, undesirably small particles of the positive electrode active material mean a large contact area for reaction, causing many side reactions. In contrast, undesirably large particles of the positive electrode active material mean a long transmission path for ions inside the particles, affecting performance.

In this application, $D_v10$ and $D_v99$ of the positive electrode active material may be determined in accordance with GB/T 19077.1-2016 by using a laser particle size analyzer (for example, Malvern Master Sizer 3000). Physical definitions of $D_v10$ and $D_v99$ are as follows:

$D_v10$: a particle size at which the cumulative distribution percentage of the positive electrode active material by volume reaches 10%; and

$D_v99$: a particle size at which the cumulative distribution percentage of the positive electrode active material by volume reaches 99%.

In some embodiments, y and a satisfy the following relationship: the value of $(\pi \times y^2)/(10000 \times a)$ ranging from 0.01 to 115. In some embodiments, the value of $(\pi \times y^2)/(10000 \times a)$ ranges from 0.01 to 20. In some embodiments, the value of $(\pi \times y^2)/(10000 \times a)$ ranges from 0.01 to 10.

In some embodiments, $D_v10$ of the positive electrode active material ranges from 3 $\mu$m to 10 $\mu$m. In some embodiments, $D_v10$ of the positive electrode active material ranges from 3.2 $\mu$m to 8 $\mu$m.

In some embodiments, $D_v10/D_v99$ of the positive electrode active material is z, and z ranges from 0.01 to 0.5; and the value of a/z ranges from 0.01 to 1. In some embodiments, z ranges from 0.05 to 0.4. In some embodiments, the value of a/z ranges from 0.05 to 0.3.

In some embodiments, the positive electrode active material includes lithium manganate $LiMn_2O_4$, optional lithium nickel cobalt manganate $Li_xNi_mCo_nMn_pO_2$, where $0.95 \leq x \leq 1.05$ and $0.98 \leq m + n + p \leq 1.02$, and $0 \leq m < 1$, $0 \leq n < 1$, and $0 < p \leq 1$ (for example, $LiNi_{0.8}Co_{0.1}Mn_{0.1}O_2$), and optional $LiFeO_4$.

In some embodiments, the positive electrode current collector may be a metal foil or a composite current collector. For example, the metal foil may be an aluminum foil, and the composite current collector may include a polymer material matrix and a metal layer formed on at least one surface of the polymer material matrix. The composite current collector may be formed by forming a metal material (aluminum, aluminum alloy, nickel, nickel alloy, titanium, titanium alloy, silver, silver alloy, or the like) on a polymer material matrix (for example, a matrix of polypropylene (PP), polyethylene terephthalate (PET), polybutylene terephthalate (PBT), polystyrene, or polyethylene (PE)).

In some embodiments, the positive electrode plate film layer further includes a binder. For example, the binder may include at least one of polyvinylidene difluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, or fluorine-containing acrylic resin.

In some embodiments, the binder has a percentage of 0.1wt% to 6wt% in the positive electrode plate film layer based on total weight of the positive electrode plate film layer, optionally, 0.5wt% to 5wt%, and preferably, 0.8wt% to 3wt%.

In some embodiments, the positive electrode plate film layer further includes a conductive agent. For example, the conductive agent may include at least one of superconducting carbon, acetylene black, carbon black, carbon nanotube, graphene, or carbon nanofibers.

In some embodiments, the conductive agent has a percentage of 0.1wt% to 6wt% in the positive electrode plate film layer based on total weight of the positive electrode plate film layer, optionally, 0.5wt% to 5wt%, and preferably, 0.8wt% to 3wt%.

In some embodiments, the positive electrode plate may be prepared in the following manner: the constituents used for preparing the positive electrode plate, for example, the positive electrode active material, the conductive agent, the binder, and any other constituent, are dissolved in a solvent (for example, N-methylpyrrolidone) to form a positive electrode slurry; and the positive electrode slurry is applied onto the positive electrode current collector, and processes such as drying and cold pressing are performed to obtain the positive electrode plate.

Negative electrode

In this application, the negative electrode is a negative electrode plate including a negative electrode current collector and a negative electrode film layer disposed on at least one surface of the negative electrode current collector, where the negative electrode film layer includes a negative electrode active material.

For example, the negative electrode current collector has two opposite surfaces in its thickness direction, and the negative electrode film layer is disposed on either or both of the two opposite surfaces of the negative electrode current collector.

In some embodiments, the negative electrode current collector may be a metal foil current collector or a composite current collector. For example, copper foil may be used as the metal foil. The composite current collector may include a polymer material matrix and a metal layer formed on at least one surface of the polymer material matrix. The composite current collector may be formed by forming a metal material (copper, copper alloy, nickel, nickel alloy, titanium, titanium alloy, silver, silver alloy, or the like) on a polymer material matrix (for example, a matrix of polypropylene (PP), polyethylene terephthalate (PET), polybutylene terephthalate (PBT), polystyrene, or polyethylene (PE)).

In some embodiments, the negative electrode active material may be a negative electrode active material for batteries well-known in the art. For example, the negative electrode active material may include at least one of the following materials: artificial graphite, natural graphite, soft carbon, hard carbon, silicon-based material, tin-based material, lithium titanate, or the like. The silicon-based material may be selected from at least one of elemental silicon, silicon-oxygen compound, silicon-carbon composite, silicon-nitrogen composite, or silicon alloy. The tin-based material may be selected from at least one of elemental tin, tin-oxygen compound, or tin alloy. However, this application is not limited to these materials, but may use other conventional materials that can be used as negative electrode active materials for batteries instead. One of these negative electrode active materials may be used alone, or two or more of them may be used in combination.

In some embodiments, the negative electrode active material has a weight percentage no less than 80% in the negative electrode plate film layer, optionally, no less than 90%, and further preferably no less than 95%. In some embodiments, the negative electrode film layer further optionally includes a binder. For example, the binder may be selected from at least one of styrene-butadiene rubber (SBR), polyacrylic acid (PAA), polyacrylic acid sodium (PAAS), polyacrylamide (PAM), polyvinyl alcohol (PVA), sodium alginate (SA), polymethacrylic acid (PMAA), or carboxymethyl chitosan (CMCS).

In some embodiments, the binder may have a weight percentage of 0.1wt% to 6wt% in the negative electrode plate film layer, optionally, 0.5wt% to 5wt%.

In some embodiments, the negative electrode film layer further optionally includes a conductive agent. For example, the conductive agent may be selected from at least one of superconducting carbon, acetylene black, carbon black, Ketjen black, carbon dots, carbon nanotubes, graphene, or carbon nanofibers.

In some embodiments, the conductive agent may have a weight percentage of 0.1 wt% to 6wt% in the negative electrode plate film layer, and optionally, 0.5wt% to 5wt%.

In some embodiments, the negative electrode film layer further optionally includes other adjuvants, for example, a thickener (for example, carboxymethyl cellulose (CMC)).

In some embodiments, the negative electrode plate may be prepared in the following manner: the constituents used for preparing the negative electrode plate, for example, the negative electrode active material, the conductive agent, the binder, and any other constituent, are dissolved in a solvent (for example, deionized water) to form a negative electrode slurry; and the negative electrode slurry is applied onto the negative electrode current collector, and processes such as drying and cold pressing are performed to obtain the negative electrode plate.

Separator

The separator is not limited to any specific type in this application, and may be any commonly known separator having high chemical stability and mechanical stability. Materials of the separator may be selected from at least one of glass fiber, non-woven fabric, polyethylene, polypropylene, or polyvinylidene fluoride. The separator may be a single-layer film or a multi-layer composite film, without any particular limitation. When the separator is a multi-layer composite film, all layers may be made of same or different materials, which is not particularly limited.

In this application, the positive electrode plate, the negative electrode plate, and the separator may be made into an electrode assembly through winding or lamination.

In this application, a lithium metal battery may include an outer package. The outer package is used for packaging the electrode assembly and the electrolyte.

In this application, the outer package of the lithium metal battery may be a hard shell, for example, a hard plastic shell, an aluminum shell, or a steel shell. The outer package of the lithium metal battery may alternatively be a soft package, for example, a soft pouch. The material of the soft package may be plastic, which, for example, may be polypropylene, polybutylene terephthalate, and polybutylene succinate.

The lithium metal battery is not limited to any specific shape in this application and may be cylindrical, rectangular, or of any other shape.

Another aspect of this application provides an electric appliance containing the foregoing electrochemical apparatus.

## Examples

The following describes the embodiments of this application through specific examples, and those skilled in the art can easily understand other advantages and effects of this application from the content disclosed in this specification. This application may also be implemented or applied through other different specific embodiments, and various details in this specification can also be modified or changed based on different viewpoints and applications without departing from the spirit of this application.

Preparation of a lithium-ion battery is as follows:

(1) Preparation of positive electrode plate

A positive electrode active material (a single positive electrode material or mixed positive electrode material), a conductive agent Super P, and a binder polyvinylidene fluoride were mixed at a weight ratio of 97:1.4:1.6, added with N-methylpyrrolidone (NMP), and stirred to uniformity by using a vacuum stirrer to obtain a positive electrode slurry with a solid content of 72wt%. The positive electrode slurry was uniformly applied onto a positive electrode current collector aluminum foil. The aluminum foil coated was dried at 100°C, followed by cold pressing, cutting, and slitting to obtain a positive electrode plate of 74 mm×867 mm. The positive electrode plate was welded with a tab for later use.

(2) Preparation of negative electrode plate

A negative electrode active material artificial graphite, a conductive agent Super P, a thickener sodium carboxymethyl cellulose (CMC-Na), and a binder styrene-butadiene rubber (SBR) were mixed at a weight ratio of 96:2:0.8:1.2, added with deionized water, and stirred by using a vacuum stirrer to obtain a negative electrode slurry having a solid content of 54wt%. The negative electrode slurry was applied uniformly on a negative electrode current collector copper foil. The copper foil coated was dried at 85°C, followed by cold pressing, cutting, and slitting to obtain a negative electrode plate of 79 mm×872 mm. The negative electrode plate was welded with a tab for later use.

(3) Preparation of electrolyte

In a dry argon atmosphere glove box, solvents were mixed at a ratio of ethylene carbonate (EC):diethyl carbonate (DEC):ethyl methyl carbonate (EMC)=3:5:2 (mass ratio), and added with lithium hexafluorophosphate (12.5wt% based on mass of a base electrolyte) to obtain the base electrolyte. A corresponding additive was added into the base electrolyte according to the type and mass percentage recorded in the following table for dissolving, and a resulting mixture was stirred to uniformity to obtain an electrolyte. The percentages of additives recorded in all tables were based on the mass of the electrolyte.

(4) Preparation of separator

A polyethylene (PE) matrix layer having a thickness of 9 $\mu$m was used, with one side coated with a polyvinylidene fluoride (PVDF) slurry and an inorganic particle (flaky boehmite and $Al_2O_3$ at a ratio of 70:30) slurry, followed by drying, to obtain a final separator having a coating thickness of 3 $\mu$m and porosity of 55%.

(5) Preparation of lithium-ion battery

The positive electrode plate, the separator, and the negative electrode plate were sequentially stacked, so that the separator was sandwiched between the positive electrode plate and the negative electrode plate for separation, and then wound to obtain an electrode assembly. The electrode assembly was placed into an outer package aluminum foil film after being welded with tabs, and the electrolyte prepared was injected into the dried electrode assembly, followed by processes such as vacuum packaging, standing, formation (charged to 3.3 V at a constant current of 0.02C, and then charged to 3.6 V at a constant current of 0.1C), shaping, and capacity test (charged to 4.2 V at a constant current of 0.5C and at a constant voltage, and discharged to 3.0 V at 0.5C) to obtain a soft pouch lithium-ion battery.

It should be noted herein that in the following Example 1-1, the positive electrode active material was obtained by mixing $LiMn_2O_4$ at a mass percentage of 90% and $LiNi_{0.8}Co_{0.1}Mn_{0.1}O_2$ particles at a mass percentage of 10%. $D_v99$ of the positive electrode active material was 45 $\mu$m, and $D_v10$ thereof was 10 $\mu$m.

Unless otherwise specified, in Table 1, other examples were substantially the same as Example 1-1 in preparation method of battery except that the percentage of FEC and related parameters of the positive electrode active material recorded were adjusted as in Table 1. Similarly, in Table 2, Example 2-1 to Example 2-10 were substantially the same as Example 1-4 in preparation method of battery except that FEC at different percentages, different positive electrode active materials, and different particle sizes were used. It can be understood herein that materials having different $D_v99$ and $D_v10$ can be obtained by adjusting sintering temperature and time during preparation, and the percentage of element Mn can be finely adjusted by doping elements as required. In Table 3, Example 3-1 to Example 3-8 were substantially the same as Example 1-4 in preparation method of battery except that FEC at different percentages was used, and that vinylene carbonate at different percentages was added. In Table 4, Example 4-1 to Example 4-15 were substantially the same as Example 1-4 in preparation method of battery except that additives of different types and percentages were added. In Table 5, Example 5-1 to Example 5-4 were substantially the same as Example 1-4 in preparation method of battery except that dimethyl carbonate at different percentages was added.

Performance test:

Cycling test and thickness change in cycling

The battery cell was put in a 45°C high temperature box, charged to 4.2 V at a constant current of 0.5C and at a constant voltage, measured to obtain a thickness $h_1$, and left standing for 15 min. The battery cell was then discharged to 3.0 V at a constant current of 0.5C and was left standing for 15 min. The above process was taken as a cycle. The capacity at the first cycle was recorded as $C_1$. After 100 cycles, the discharge capacity at the 100th cycle was recorded as $C_{100}$, and the thickness at the 100th cycle was recorded as $h_{100}$. The cycling capacity retention rate was $[C_{100}/C_1] \times 100\%$, and the thickness change rate was $[(h_{100}/h_1) - 1] \times 100\%$.

Discharge test at low temperature

The battery cell was put in a high and low temperature box with the temperature adjusted to 25°C, charged to 4.2 V at a constant current of 0.2C and a constant voltage, and then was discharged to 3.0 V at 0.2C. The discharge capacity at this point was recorded as $C_{25}$ (mAh). Then the battery cell was charged to 4.2 V at a constant current of 0.2C and a constant voltage, the temperature of the high and low temperature box was adjusted to -20°C, and then the battery cell was discharged to 3.0 V at a constant current of 0.2C. The discharge capacity at this point was recorded as $C_{-20}$ (mAh). The discharge capacity retention rate at a low temperature was $[C_{-20}/C_{25}] \times 100\%$.

Full-charge storage at high temperature

The battery cell was charged at a temperature of 25°C to 4.35 V at a constant current of 0.5C and a constant voltage, discharged to 3.0 V at 0.2C (the discharge capacity was recorded as $C_0$), then charged to 4.35 V at a constant current of 0.5C and a constant voltage, and measured to obtain an initial thickness di. Then the battery cell was put in a 60°C furnace for 30-day storage and then measured to obtain a thickness $d_2$. After the storage, the battery cell was discharged at a temperature of 25°C to 3.0 V at 0.2C, charged to 4.35 V at a constant current of 0.5C and a constant voltage, and then discharged to 3.0 V at 0.2C (the discharge capacity was recorded as $C_{30}$).

A thickness change rate after full-charge storage at high-temperature was [(d2/dl) - 1] $\times$ 100%.

A recoverable capacity after 30-day storage at 60°C was [($C_0/C_{30}$) - 1] $\times$ 100%.

The preparation parameters and performance tests of Examples and Comparative Examples are shown in Table 1 to Table 5.

Table 1 Influence of percentage of fluoroethylene carbonate (FEC) and unit reaction area (c) of positive electrode active material on cycling performance and storage performance

**Table 1**

| Example | Percentage a of FEC | W (g/cm²) | BET (m²/g) | c (m²/cm²) | a/c | Capacity retention rate after 100 cycles at 45°C | Thickness change rate after 30-day storage at 60°C |
|---|---|---|---|---|---|---|---|
| 1-1 | 1.00% | 0.0080 | 1.00 | 0.0080 | 1.2500 | 64.65% | 10.20% |
| 1-2 | 1.00% | 0.0173 | 1.21 | 0.0209 | 0.4777 | 64.60% | 10.40% |
| 1-3 | 1.00% | 0.0227 | 1.55 | 0.0352 | 0.2842 | 64.55% | 10.50% |
| 1-4 | 1.00% | 0.0260 | 2.03 | 0.0528 | 0.1895 | 64.50% | 10.70% |
| 1-5 | 3.00% | 0.0260 | 2.51 | 0.0653 | 0.4594 | 64.53% | 11.00% |
| 1-6 | 1.00% | 0.0292 | 3.45 | 0.1007 | 0.0993 | 64.40% | 11.20% |
| 1-7 | 1.00% | 0.0350 | 5.00 | 0.1750 | 0.0571 | 64.25% | 11.50% |
| 1-8 | 0.10% | 0.0260 | 2.03 | 0.0528 | 0.0189 | 64.30% | 10.30% |
| 1-9 | 5.00% | 0.0260 | 2.03 | 0.0528 | 0.9473 | 64.70% | 11.80% |
| 1-10 | 0.01% | 0.0350 | 4.76 | 0.1666 | 0.0006 | 64.10% | 10.20% |
| 1-11 | 3.00% | 0.0080 | 1.00 | 0.0080 | 3.75 | 64.50% | 11.70% |
| 1-12 | 5.00% | 0.0080 | 1.00 | 0.0080 | 6.2500 | 64.85% | 12.00% |
| Comparative Example 1-1 | 0 | 0.026 | 2.03 | 0.0528 | 0 | 62.10% | 15.60% |
| Comparative Example 1-2 | 6.00% | 0.008 | 0.90 | 0.0072 | 8.3333 | 62.50% | 16.80% |

In Table 1, it can be seen from Example 1-1 to Example 1-12, Comparative Example 1-1, and Comparative example 1-2 that the ratio of the percentage of the fluoroethylene carbonate in the positive electrode material to the unit reaction area c of the positive electrode active material being in a specified range improves both the cycling performance and the high-temperature storage performance of the battery, mainly because the fluoroethylene carbonate may be oxidatively decomposed on the surface of the positive electrode to form, together with the lithium salt in the electrolyte, a protective layer on the surface of the positive electrode, and on a basis of a proper unit reaction area of the positive electrode active material, FEC at a proper percentage can protect the positive electrode active material, alleviate adverse effects on the positive electrode of HF produced in FEC decomposition, and improve stability of the negative electrode interface during cycling and storage.

Table 2 Influence of different positive electrode active materials and particle sizes thereof on cycling performance and low-temperature discharge performance

**Table 2**

| Example | Positive electrode active material | Percentage a of FEC | $D_v99$ ($\mu m$) | $D_v10$ ($\mu m$) | a/z | Capacity retention rate after 100 cycles at 45°C | Low-temperature discharge capacity retention rate |
|---|---|---|---|---|---|---|---|
| 1-4 | 90% $LiMn_2O_4$+10% $LiNi_{0.8}Co_{0.1}Mn_{0.1}O_2$ | 1.00% | 45 | 6.0 | 0.075 | 64.5% | 72.9% |
| 2-1 | $LiMn_2O_4$ | 0.01% | 24 | 4.8 | 0.0005 | 63.5% | 72.0% |
| 2-2 | $LiMn_2O_4$ | 5.00% | 120 | 6.0 | 1.0000 | 66.5% | 70.3% |
| 2-3 | $LiMn_2O_4$ | 0.01% | 60 | 4.1 | 0.0015 | 64.0% | 69.6% |
| 2-4 | 90% $LiMn_2O_4$+10% $LiNi_{0.8}Co_{0.1}Mn_{0.1}O_2$ | 1.00% | 53 | 5.0 | 0.1060 | 67.7% | 73.9% |
| 2-5 | 80% $LiMn_2O_4$+20% $LiNi_{0.8}Co_{0.1}Mn_{0.1}O_2$ | 1.00% | 50 | 4.5 | 0.1111 | 68.1% | 74.2% |
| 2-6 | 50% $LiMn_2O_4$+50% $LiNi_{0.8}Co_{0.1}Mn_{0.1}O_2$ | 1.00% | 41 | 4.1 | 0.1000 | 69.7% | 75.4% |
| 2-7 | 30% $LiMn_2O_4$+70% $LiNi_{0.8}Co_{0.1}Mn_{0.1}O_2$ | 1.00% | 20 | 3.5 | 0.0571 | 70.3% | 76.1% |
| 2-8 | 30% $LiMn_2O_4$+70% $LiNi_{0.8}Co_{0.1}Mn_{0.1}O_2$ | 5% | 20 | 3.5 | 0.2857 | 72.50% | 76.5% |
| 2-9 | 90% $LiMn_2O_4$+10% $LiNi_{0.8}Co_{0.1}Mn_{0.1}O_2$ | 1.00% | 52 | 5.2 | 0.1000 | 67.90% | 73.5% |
| 2-10 | 90% $LiMn_2O_4$+10% $LiFeO_4$ | 1.00% | 51 | 4.0 | 0.1275 | 68.00% | 71.7% |

Table 2 shows data on $D_v10$, $D_v99$, cycling performance, and low-temperature discharge performance corresponding to different lithium manganate materials and mixed materials. When the value of a/z ranges from 0.01 to 1, the electrochemical apparatus can maintain good comprehensive performance. Particularly, when the value of a/z ranges from 0.05 to 0.3, the low-temperature discharge capacity retention rate of the electrochemical apparatus is significantly improved. The reason may be that with the value of a/z maintained in a proper range, local side reactions caused by distribution of particle sizes do not occur, and the interface between the positive electrode active material and the electrolyte is uniform on the whole, bringing positive effects on transmission performance of ions.

Table 3 Influence of adding vinylene carbonate (VC) on cycling performance

**Table 3**

| Example | Percentage a of FEC | Percentage b of VC | Percentage x of element Mn | 0.11a − 0.05% | 5.1a + 0.45% | Whether to satisfy 0.11a − 0.05% < b < 5.1a + 0.45% | b/x | Capacity retention rate after 100 cycles at 45°C | Thickness change rate after 100 cycles at 45°C |
|---|---|---|---|---|---|---|---|---|---|
| 1-4 | 1.00% | – | 57.60% | 0.06% | 5.55% | – | – | 72.50% | 15.20% |
| 3-1 | 1.00% | 0.01% | 57.60% | 0.06% | 5.55% | No | 0.00017 | 73.10% | 14.40% |
| 3-2 | 1.00% | 0.10% | 57.60% | 0.06% | 5.55% | Yes | 0.00174 | 74.50% | 12.50% |
| 3-3 | 1.00% | 0.50% | 57.60% | 0.06% | 5.55% | Yes | 0.00868 | 75.30% | 10.10% |
| 3-4 | 1.00% | 1.00% | 57.60% | 0.06% | 5.55% | Yes | 0.01736 | 75.90% | 9.50% |
| 3-5 | 1.00% | 3.00% | 57.60% | 0.06% | 5.55% | Yes | 0.05208 | 76.30% | 8.60% |
| 3-6 | 0.10% | 0.50% | 57.60% | -0.04% | 0.96% | Yes | 0.00868 | 74.00% | 10.80% |
| 3-7 | 5.00% | 0.50% | 57.60% | 0.50% | 25.95% | Yes | 0.00868 | 76.50% | 8.50% |
| 3-8 | 0.10% | 1.20% | 57.60% | -0.04% | 0.96% | No | 0.02083 | 73.30% | 14.20% |

In Table 3, it can be seen from Example 3-1 to Example 3-8 that, adding VC can further improve the cycling capacity retention rate and alleviate the thickness change during cycling. Particularly, when the percentages of VC and FEC meet 0.11a - 0.05% < b < 5.1a + 0.45%, the cycling retention rate of the electrochemical apparatus is further improved, and high-temperature thickness swelling thereof is significantly alleviated. The reason may be that VC and FEC aggregate into a film of an organic polymeric composition. When 0.11a - 0.05% < b < 5.1a + 0.45% is satisfied, the stability of the SEI is improved, reducing SEI damages caused by reduction of dissolved $Mn^{2+}$ at the negative electrode, and alleviating thickness increase caused by side reactions.

Table 4 Influence of additives on storage performance

**Table 4**

| Example | Additive | Percentage (%) | Thickness change rate after 30-day storage at 60°C | Recoverable capacity after 30-day storage at 60°C |
|---|---|---|---|---|
| 1-4 | - | - | 10.70% | 72.40% |
| 4-1 | MMDS | 0.10% | 10.20% | 73.10% |
| 4-2 | PES | 0.10% | 8.30% | 73.50% |
| 4-3 | PS | 1% | 8.50% | 73.30% |
| 4-4 | $LiPO_2F_2$ | 0.30% | 8.10% | 73.80% |
| 4-5 | LiFSI | 0.01% | 10.40% | 72.50% |
| 4-6 | LiFSI | 1% | 10.00% | 73.00% |
| 4-7 | LiFSI | 5% | 9.80% | 74.80% |
| 4-8 | LiFSI | 10% | 8.00% | 76.10% |
| 4-9 | PS+MMDS | 1%+0.1% | 8.20% | 73.60% |
| 4-10 | PS+LiFSI | 1%+5% | 8.10% | 73.60% |
| 4-11 | 2-PY | 0.01% | 10.00% | 72.60% |
| 4-12 | 2-PY | 0.20% | 9.50% | 73.60% |
| 4-13 | $LiFSI+LiPO_2F_2$ | 5%+0.3% | 7.9% | 75.30% |
| 4-14 | LiFSI+PES | 5%+1% | 8.0% | 73.80% |
| 4-15 | LiFSI+2-PY | 5%+0.20% | 8.5% | 75.40% |

Table 4 shows influence of adding additive A on the stability of storage: Gas production after high temperature storage can be alleviated, and capacity recovery after storage can be improved. The reason may mainly be that the combination of such additive and FEC can reduce side reactions of the system after high temperature storage, reducing active lithium consumed by the electrolyte after long-term storage. Particularly, when at least one of LiFSI, $LiPO_2F_2$, and 2-PY is added into the electrolyte, the comprehensive performance of the electrochemical apparatus is significantly improved.

Table 5 Influence of adding dimethyl carbonate (DMC) on cycling performance and storage performance

**Table 5**

| Example | Percentage of DMC | Capacity retention rate after 100 cycles at 45°C | Thickness change rate after 30-day storage at 60°C |
|---------|-------------------|--------------------------------------------------|----------------------------------------------------|
| 1-4 | 0 | 64.50% | 10.70% |
| 5-1 | 0.1% | 64.80% | 10.60% |
| 5-2 | 1% | 64.90% | 10.50% |
| 5-3 | 5% | 65.00% | 10.60% |
| 5-4 | 6% | 64.10% | 11.20% |

In Table 5, it can be seen from Example 5-1 to Example 5-4 and Example 1-4 that adding DMC at a specified percentage can improve the cycling performance and the storage performance. The reason may mainly be that a small amount of DMC can inhibit decomposition of EMC, alleviating cycle life deterioration caused by side reactions. However, an undesirably large amount of DMC causes gas production during storage and cycling degradation due to poor oxidation resistance of DMC.

**Claims**

1. An electrochemical apparatus, comprising a positive electrode, a negative electrode, a separator, and an electrolyte,

   wherein the electrolyte comprises fluoroethylene carbonate, wherein a percentage a of the fluoroethylene carbonate is 0.01% to 5% based on mass of the electrolyte;
   the positive electrode comprises a positive electrode active material, wherein the positive electrode active material contains element Mn, and a percentage of the element Mn is greater than or equal to 15% based on mass of the positive electrode active material; and
   the positive electrode active material has a unit reaction area c measured in $m^2/cm^2$, wherein a and c satisfy the following relationship: $0.0006 \leq a/c \leq 6.25$, and the unit reaction area is a product of a weight W of the positive electrode active material per unit area and a specific surface area BET of the positive electrode active material.

2. The electrochemical apparatus according to claim 1, satisfying at least one of the following conditions:

   (a)

$$0.0006 \leq a/c \leq 2.5;$$

   (b) the percentage of the fluoroethylene carbonate being 0.05% to 5% based on the mass of the electrolyte; or
   (c) W ranging from 8 $mg/cm^2$ to 35 $mg/cm^2$, and BET ranging from 1 $m^2/g$ to 5 $m2/g$.

3. The electrochemical apparatus according to claim 1 or 2, the electrochemical apparatus satisfying at least one of the following conditions:

   (a) a/z being 0.01 to 1, wherein z is $D_V10/D_V99$ of the positive electrode active material; or
   (b)

$$0.001 \leq a/c \leq 4.5.$$

4. The electrochemical apparatus according to claim 1 or 2, wherein the electrolyte further comprises vinylene carbonate, wherein a percentage b of the vinylene carbonate is 0.01% to 5% based on the mass of the electrolyte.

5. The electrochemical apparatus according to claim 4, wherein at least one of the following conditions is satisfied:

   (a)

$$0.11a - 0.05\% < b < 5.1a + 0.45\%;$$

   or
   (b) $b/x \geq 10^{-3}$, wherein x is the percentage of the element manganese in the positive electrode active material.

6. The electrochemical apparatus according to claim 1 or 2, wherein the electrolyte further comprises an additive A, wherein the additive A is selected from at least one of methylene methane disulfonate, 1,3-propene sultone, 1,3-propanesulfonate, succinic anhydride, lithium difluorophosphate, 2-fluoropyridine, or lithium bis(fluorosulfonyl)imide, and a percentage of the additive A is 0.01% to 10% based on the mass of the electrolyte.

7. The electrochemical apparatus according to claim 1 or 2, wherein the electrolyte further comprises dimethyl carbonate, wherein a percentage of the dimethyl carbonate is less than or equal to 5% based on the mass of the electrolyte.

8. The electrochemical apparatus according to claim 1 or 2, wherein the positive electrode active material comprises at least one of lithium manganate or lithium nickel cobalt manganate.

9. The electrochemical apparatus according to claim 1 or 2, satisfying at least one of the following conditions:

   (a) the percentage of the fluoroethylene carbonate being 0.05% to 3% based on the mass of the electrolyte;
   (b) W ranging from 13 $mg/cm^2$ to 30 $mg/cm^2$, and BET ranging from 1.2 $m^2/g$ to 3.5 $m^2/g$;
   (c) the electrolyte further comprising vinylene carbonate, and a percentage of the vinylene carbonate being 0.01% to 2% based on the mass of the electrolyte;
   (d) the electrolyte further comprising dimethyl carbonate, and a percentage of the dimethyl carbonate being less than or equal to 1% based on the mass of the electrolyte;
   (e) a percentage of element Mn being less than or equal to 60% in the positive electrode active material; or
   (f) a/z being 0.05 to 0.3, wherein z is $D_v10/D_v99$ of the positive electrode active material.

10. An electric appliance, comprising the electrochemical apparatus according to any one of claims 1 to 9.

## INTERNATIONAL SEARCH REPORT

| | International application No. |
|---|---|
| | **PCT/CN2023/071258** |

**A. CLASSIFICATION OF SUBJECT MATTER**

H01M10/0567(2010.01)i;H01M4/525(2010.01)n;H01M4/505(2010.01)n;H01M10/0525(2010.01)n

According to International Patent Classification (IPC) or to both national classification and IPC

**B. FIELDS SEARCHED**

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

CNABS, CNKI, CNTXT, VEN: 电池, 电极, 正极, 阴极, 电解液, 氟代碳酸乙烯酯, FEC, 氟代碳酸亚乙酯, Mn, 锰, 单位反应面积, 比表面积, BET, 单位面积, 重量, 质量, 循环, 储存, 保护层, 氧化分解, HF, battery, electrode, positive, cathode, electrolyte, fluoroethylene, carbonate, surface, area, unit, weight, mass, cycling, storage, protective, layer, oxidative, decomposition

**C. DOCUMENTS CONSIDERED TO BE RELEVANT**

| Category* | Citation of document, with indication, where appropriate, of the relevant passages | Relevant to claim No. |
|---|---|---|
| PX | CN 114649591 A (NINGDE AMPEREX TECHNOLOGY LTD.) 21 June 2022 (2022-06-21) claims 1-10 | 1-10 |
| X | CN 113206295 A (NINGDE AMPEREX TECHNOLOGY LTD.) 03 August 2021 (2021-08-03) description, paragraphs 0004-0104 and 0108-0151 | 1-10 |
| A | CN 112310470 A (NINGDE AMPEREX TECHNOLOGY LTD.) 02 February 2021 (2021-02-02) entire document | 1-10 |
| A | CN 110518232 A (NINGDE CONTEMPORARY AMPEREX TECHNOLOGY CO., LTD.) 29 November 2019 (2019-11-29) entire document | 1-10 |
| A | JP 2003272611 A (JAPAN STORAGE BATTERY CO., LTD.) 26 September 2003 (2003-09-26) entire document | 1-10 |

☑ Further documents are listed in the continuation of Box C.    ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **24 March 2023** | **29 March 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

## INTERNATIONAL SEARCH REPORT

International application No.

**PCT/CN2023/071258**

**C.    DOCUMENTS CONSIDERED TO BE RELEVANT**

| Category* | Citation of document, with indication, where appropriate, of the relevant passages | Relevant to claim No. |
|---|---|---|
| A | JP 2017091715 A (TOYOTA CENTRAL R&D LABS., INC. et al.) 25 May 2017 (2017-05-25)<br>        entire document | 1-10 |

Form PCT/ISA/210 (second sheet) (July 2022)

INTERNATIONAL SEARCH REPORT
Information on patent family members

International application No.

**PCT/CN2023/071258**

| Patent document cited in search report | | | Publication date (day/month/year) | Patent family member(s) | | | Publication date (day/month/year) |
|---|---|---|---|---|---|---|---|
| CN | 114649591 | A | 21 June 2022 | None | | | |
| CN | 113206295 | A | 03 August 2021 | None | | | |
| CN | 112310470 | A | 02 February 2021 | CN | 112310470 | B | 21 September 2021 |
| | | | | WO | 2022089280 | A1 | 05 May 2022 |
| CN | 110518232 | A | 29 November 2019 | US | 2022052338 | A1 | 17 February 2022 |
| | | | | EP | 3951946 | A1 | 09 February 2022 |
| | | | | EP | 3951946 | A4 | 15 June 2022 |
| | | | | EP | 3951946 | B1 | 30 November 2022 |
| | | | | ES | 2934943 | T3 | 28 February 2023 |
| | | | | WO | 2020220662 | A1 | 05 November 2020 |
| | | | | CN | 110518232 | B | 15 December 2020 |
| JP | 2003272611 | A | 26 September 2003 | None | | | |
| JP | 2017091715 | A | 25 May 2017 | JP | 6652814 | B2 | 26 February 2020 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210335359